# EUROPEAN PATENT APPLICATION

(11) **EP 4 756 133 A2**
(43) Date of publication of application: **10.06.2026**
(21) Application number: 26169336.0
(22) Date of filing: 10.04.2024
(51) Int. Cl.: E02F 9/20

(54) **OPERATION DEVICE AND WORK MACHINE**

(30) Priority: 19.04.2023 JP 2023068639
(62) Divisional of application: 24169447.0
(71) Applicant: Yanmar Holdings Co., Ltd., Osaka-shi, Osaka 530-0013 (JP)
(72) Inventor: OTSU, Motoharu, Chikugo-shi (JP)
(74) Representative: Sekiguchi, Kazuya

(57) **Abstract**

[Problem] A technique capable of improving the operability of an expansion-type operation device is provided.

[Solution] An exemplary operation device includes: a lever stand that is disposed on a side of a seat and has an operation lever; a lever stand support portion that supports the lever stand so that the lever stand is pivotable up and down; a base portion that is disposed below the lever stand support portion and supports the lever stand support portion so that the lever stand support portion is pivotable left and right; and a holding plate that is supported by the base portion and disposed above a bottom portion of the lever stand support portion. When the lever stand is pivoted from the first posture to the second posture, the lever stand support portion is made pivotable in a left-right direction to select a third posture or a fourth posture. The holding plate holds, in the third posture or the fourth posture, the lever stand support portion supporting the lever stand in the first posture.

## Description

### TECHNICAL FIELD

The present invention relates to an operation device and a work machine.

### BACKGROUND ART

In the related art, an expansion-type remote control valve unit is known in which remote control valve units on both left and right sides of a seat, on which an operator sits, are configured to be expandable to the left and right (for example, see Patent Document 1).

In the expansion-type remote control valve unit of Patent Document 1, a rotary drive body is provided at a rear portion or a rear side of the remote control valve unit. The remote control valve unit is rotated around the rotary drive body so that the front portion of the remote control valve unit is positioned outside with respect to the rear portion of the remote control valve unit by a preset range. A lock mechanism is provided for locking the remote control valve unit rotated outward at a preset position. The lock mechanism includes a moving plate that rotates integrally with the remote control valve unit, and a support plate that supports the remote control valve unit from below. A lock hole is formed in one of the moving plate and the support plate, and a lock pin that is to be inserted into the lock hole is provided in the other of the moving plate and the support plate. When the lock pin is inserted into the lock hole, the rotation of the remote control valve unit is locked.

### PRIOR ART DOCUMENT

### PATENT DOCUMENT

Patent Document 1: Japanese Unexamined Patent Application Publication No. 2020-45744

### SUMMARY OF INVENTION

### TECHNICAL PROBLEM

In Patent Document 1, the remote control valve unit is configured such that a front portion thereof is rotatable up and down about a rear portion or a rear side thereof. The lock mechanism is configured to be operable in a state in which the front portion of the remote control valve unit is moved upward. That is, in the related art, in order to make the lock mechanism operable, it is firstly required to lift the remote control valve unit. Then, after the lock mechanism is made operable by lifting the remote control valve unit, the lock mechanism is unlocked by pulling out the lock pin from the lock hole. After the lock mechanism is unlocked, the remote control valve unit can be rotated.

In the prier art configuration, there is a possibility that a user may feel that there is a lot of operations to rotate the remote control valve unit locked by the lock mechanism. That is, there is a possibility that the user desires an extension-type operation device with better operability.

In view of the above, an object of the present invention is to provide a technique capable of improving the operability of an expansion-type operation device.

### SOLUTION TO PROBLEM

An exemplary operation device of present invention includes:
a lever stand that is disposed on a side of a seat and has an operation lever: a lever stand support portion that supports the lever stand so that the lever stand is pivotable up and down; a base portion that is disposed below the lever stand support portion and supports the lever stand support portion so that the lever stand support portion is pivotable left and right; and
a holding plate that is supported by the base portion and disposed above a bottom portion of the lever stand support portion. When the lever stand is pivoted from the first posture to the second posture, the lever stand support portion is made pivotable in a left-right direction to select a third posture or a fourth posture. The holding plate holds, in the third posture or the fourth posture, the lever stand support portion supporting the lever stand in the first posture.

### ADVANTAGEOUS EFFECTS OF INVENTION

According to the exemplary present invention, the operability of the expansion-type operation device can be improved.

### BRIEF DESCRIPTION OF DRAWINGS

FIG. 1 is a side view illustrating a schematic configuration of a work machine.
FIG. 2A is a top view illustrating a schematic configuration of a swing body included in the work machine.
FIG. 2B is a view showing a state in which the posture of an operation device has been changed from the state shown in FIG. 2A.
FIG. 3A is a front view illustrating a schematic configuration of a pair of operation devices included in the work machine.
FIG. 3B is a view showing a state in which the posture of the pair of operation devices have been changed from the state shown in FIG. 3A.
FIG. 4A is a perspective view showing a schematic configuration of the operation device on a left side.
FIG. 4B is a view showing a state in which the posture of a lever stand has been changed from a first posture shown in FIG. 4A to a second posture.
FIG. 5 is a perspective view showing a schematic configuration of a lever stand support portion.
FIG. 6 is a perspective view illustrating a schematic configuration of a base portion.
FIG. 7A is a schematic perspective view showing a relationship between the lever stand support portion, the base portion, and a holding plate.
FIG. 7B is a view showing a state in which the posture of the lever stand support portion has been changed from a third posture shown in FIG. 7A to a fourth posture.
FIG. 8A is a view explaining a lifting operation of the lever stand.
FIG. 8B is a view explaining a lifting operation of the lever stand.

### DESCRIPTION OF EMBODIMENTS

Hereinafter, an exemplary embodiment of the present invention will be described in detail with reference to the drawings. In the drawings, the same or corresponding parts are denoted by the same reference characters, and a description thereof will not be repeated unless otherwise required.

### <1. Schematic Configuration of Work Machine>

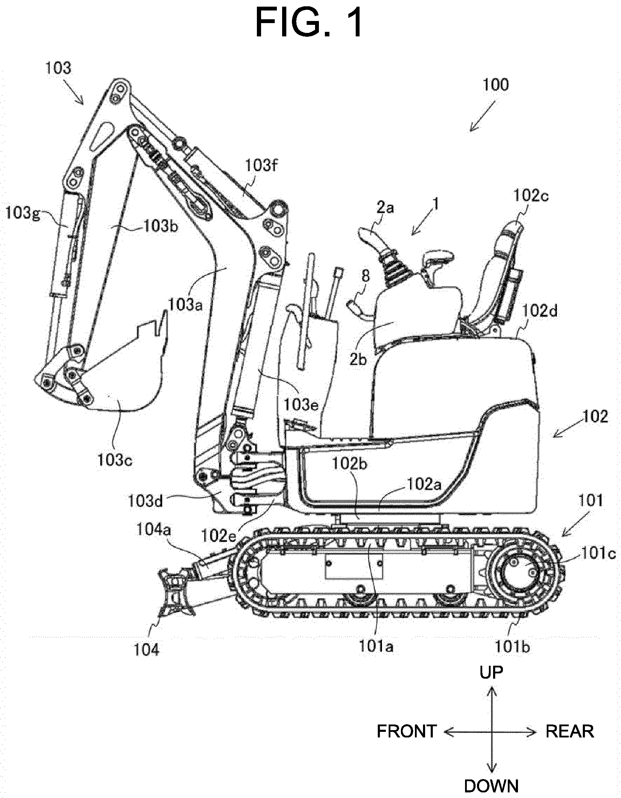

FIG. 1 is a side view illustrating a schematic configuration of a work machine 100 according to an embodiment of the present invention. The work machine 100 includes an operation device 1 according to the embodiment of the present invention. The operation device 1 is a device for operating the work machine 100. In detail, the work machine 100 is a hydraulic excavator. The operation device 1 is a device for operating the hydraulic excavator. Note that the work machine to which the operation device of the present invention is applied is not limited to a hydraulic excavator. The operation device of the present invention may be applied to another work machine such as a wheel loader and a bulldozer, etc.

As shown in FIG. 1, the work machine 100 includes a traveling body 101, a swing body 102, and a work device 103.

Here, directions in this specification are defined as follows. A direction in which the traveling body 101 travels straight ahead is defined as a front-rear direction, and one side in the front-rear direction is defined as "front" and the other side in the front-rear direction is defined as "rear." In this specification, the side of the traveling body 101 to which a blade 104 is attached is referred to as "front". A lateral direction perpendicular to the front-rear direction is defined as a left-right direction. In this specification, a left side and a right side when viewed from the rear to the front are referred to as "left" and "right", respectively. Further, a gravity direction perpendicular to the front-rear direction and the left-right direction is defined as an up-down direction, and an upstream side of the gravity direction is defined as "up" and a downstream side thereof is defined as "down." In the present specification, a plane parallel to the up-down direction may be referred to as a vertical plane. Note that these directions are merely names used for the purpose of illustration, and are not intended to limit the actual positional relationship and directions.

The traveling body 101 enables the work machine 100 to travel by itself. Specifically, the traveling body 101 includes a pair of crawlers 101b disposed on the left and right of a traveling body frame 101a. Each crawler 101b is driven by a traveling motor 101c composed of a hydraulic motor. When the pair of left and right crawlers 101b are simultaneously driven in the same direction, the traveling body 101 travels straight forward or rearward. Which direction (forward or rearward) the traveling body 101 moves is determined by the rotation direction of the traveling motor 101c. When the pair of left and right crawlers 101b are independently driven, the traveling body 101 turns left or right.

Note that although the traveling body 101 of the present embodiment is a crawler type, the traveling body is not limited to the crawler type and may be a wheel type or the like. Further, in the present embodiment, a front portion of the traveling body 101 is provided with a blade 104 that is movable up and down by extension and contraction of a blade cylinder 104a composed of a hydraulic cylinder. By using the blade 104, the work machine 100 can perform ground leveling work. Note that the blade 104 may not be provided.

The swing body 102 is swingably mounted on the traveling body 101. Specifically, swing body 102 has a swing body frame 102a and a swing table 102b fixed to the swing body frame 102a. The swing table 102b is disposed between the pair of left and right crawlers 101b when seen in a plan view. The swing table 102b is rotatably supported by the traveling body frame 101a. The swing table 102b is driven by a swing motor (not shown) composed of a hydraulic motor and swings about a central axis extending in the up-down direction. The swing body frame 102a can swing to the right and left together with the swing table 102b.

In the present specification, directions are expressed on the assumption that the swing body 102 is directed forward as shown in FIG. 1.

A seat (driver's seat) 102c on which an operator who operates the work machine 100 sits is disposed on the swing body 102. That is, the work machine 100 includes the seat 102c. An operator sitting on the seat 102c operates various operation levers and pedals provided in the vicinity of the seat 102c. The various operation levers include an operation lever 2a included in the operation device 1.

The seat 102c is supported by a hood (prime mover cover) 102d that covers a prime mover mounted on the swing body frame 102a. The prime mover drives a hydraulic pump (not shown) that supplies pressure oil to a hydraulic actuator mounted on the work machine 100. The prime mover may be, for example, at least one of an engine and an electric motor. The hydraulic actuator includes various hydraulic motors and hydraulic cylinders.

The work device 103 includes a boom 103a, an arm 103b, and a bucket 103c. The work device 103 moves the boom 103a, the arm 103b, and the bucket 103c simultaneously or independently to perform excavation work of soil and sand or the like. Note that the bucket 103c may be replaced with another work tool such as a breaker used when a demolishing work is performed, for example.

One end of the boom 103a is supported by the boom bracket 103d and the boom 103a is rotatable in a vertical plane by a boom cylinder 103e that is provided to be expandable and contractible. One end of the arm 103b is supported by the other end of the boom 103a and the arm 103b is rotatable in a vertical plane by an arm cylinder 103f that is provided to be expandable and contractible. One end of the bucket 103c is supported by the other end of the arm 103b and the bucket 103c is rotatable in a vertical plane by a bucket cylinder 103g that is provided to be expandable and contractible. In FIG. 1, the boom 103a, the arm 103b, and the bucket 103c are each provided to be rotatable about a central shaft extending in the left-right direction.

The work device 103 is attached to an installation portion 102e of the swing body 102. The installation portion 102e protrudes forward from a front end portion of the swing body 102. The boom bracket 103d is supported by the installation portion 102e so as to be rotatable about a central axis extending in the up-down direction. The boom bracket 103d is connected to a swing cylinder (not shown) disposed on the swing body 102 so as to be extendable and contractible in the front-rear direction. The boom bracket 103d is pivoted counterclockwise or clockwise by expansion and contraction of the swing cylinder. That is, by the action the swing cylinder, it is possible to swing the work device 103 counterclockwise or clockwise.

An operator sitting on the seat 102c can control various hydraulic actuators and the like by operating the operation device 1 and the like to perform work using the work device 103.

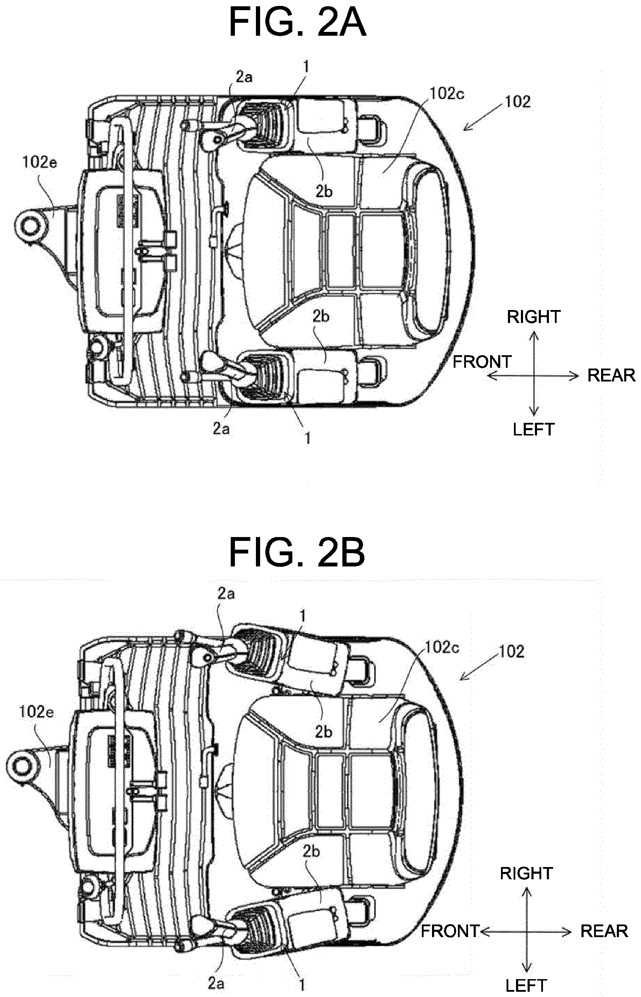

FIG. 2A and FIG. 2B are top views illustrating a schematic configuration of the swing body 102 included in the work machine 100. FIG. 2B is a view showing a state in which the posture of the operation device 1 has been changed from the state shown in FIG. 2A. As shown in FIG. 2A and FIG. 2B, in the work machine 100, operation devices 1 for operating the work machine 100 are arranged on the left side and the right side of the seat 102c. The pair of left and right operation devices 1 are provided so that a distance therebetween in the left-right direction can be changed.

In the state shown in FIG. 2A, the pair of left and right operation devices 1 are in the width of the swing body 102 in the left-right direction, and do not protrude from the swing body 102 in the left-right direction. On the other hand, in the state shown in FIG. 2B, the pair of left and right operation devices 1 are not in the width of the swing body 102 in the left-right direction, and parts of the operation devices 1 protrude from the swing body 102 in the left-right direction. It can be said that, with reference to the state shown in FIG. 2A, the width of the pair of left and right operation devices 1 in the left-right direction can be expanded by changing the state shown in FIG. 2A to the state shown in FIG. 2B. That is, it can be said that the operation device 1 included in the work machine 100 is an expansion-type operation device.

Hereinafter, for the sake of convenience, the state shown in FIG. 2A in which the distance between the pair of operation devices 1 in the left-right direction is narrowed may be referred to as a narrowed state. Further, the state in shown in FIG. 2B which the distance between the pair of operation devices 1 in the left-right direction is expanded may be referred to as an expanded state. The narrowed state shown in FIG. 2A is a state convenient for the work machine 100 to pass through a narrow place. An example of passing through a narrow place may be, for example, passing through a frontage in a case where indoor demolition work is performed by the work machine 100. The expanded state shown in FIG. 2B is a state convenient for performing work using the work device 103. In the expanded state, the possibility that an operator sitting on the seat 102c feels tight due to the presence of the operation device 1 can be reduced.

In the present embodiment, each of the pair of operation devices 1 can select only two postures, that is, a posture for the narrowed state and a posture for the expanded state. However, this is merely an example. Each of the pair of operation devices 1 can select more than two postures to change the width in the left-right direction.

### <2. Structure of Operation Device>

Next, the structure of the above-described operation device 1 (expansion-type operation device) having an expansion function of expanding the width in the left-right direction will be described in detail.

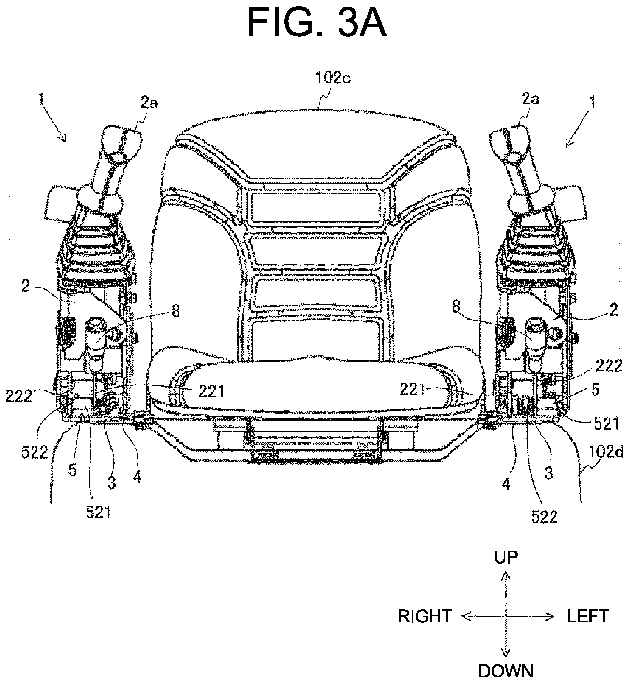

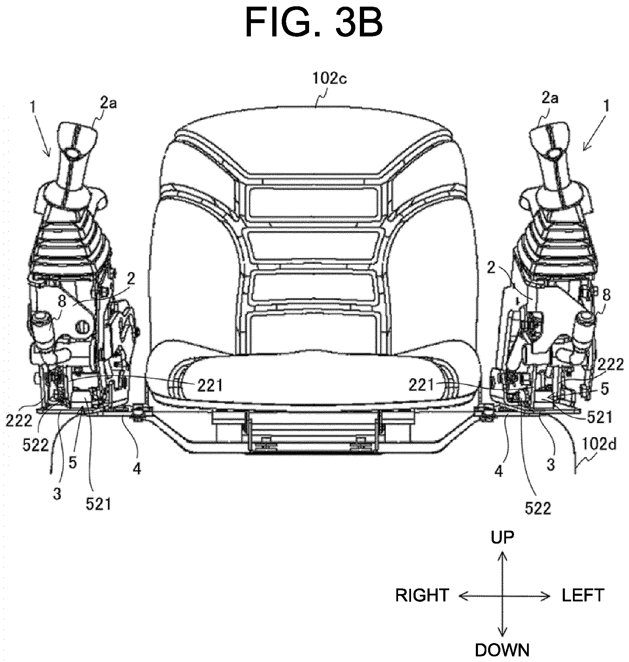

FIG. 3A and FIG. 3B are front views illustrating the schematic configuration of the pair of operation devices included in the work machine 100. FIG. 3B is a view showing a state in which the posture of the pair of operation devices 1 has been changed from the state shown in FIG. 3A. Specifically, FIG. 3A is a view in which the pair of operation devices 1 are in the narrowed state. FIG. 3B is a view in which the pair of operation devices 1 are in the expanded state. Note that FIG. 3A and FIG. 3B also show members existing around the pair of operation devices 1 for ease of understanding. Further, in FIG. 3A and FIG. 3B, a cover 2b that covers a part of the members constituting the operation device 1 (see FIG. 1, FIG. 2A, and FIG. 2B) is removed.

As shown in FIG. 3A and FIG. 3B, the operation devices 1 disposed on the left and right sides of the seat 102c are disposed on the hood 102d. Each of the left and right operation devices 1 includes a lever stand 2, a lever stand support portion 3, a base portion 4, and a holding plate 5. The left and right operation devices 1 have the same structure.

Note that the structures of the left and right operation devices 1 specifically have slight differences in the shapes, arrangements, and orientations of the constituent members. However, the design concept of the left and right operation devices 1 and the functions of the left and right operation devices 1 are the same. For this reason, the description of the structure of the operation device 1 will be made with reference to the operation device 1 disposed on the left side as a representative example. The description of the structure of the operation device 1 disposed on the right side will be omitted if not required.

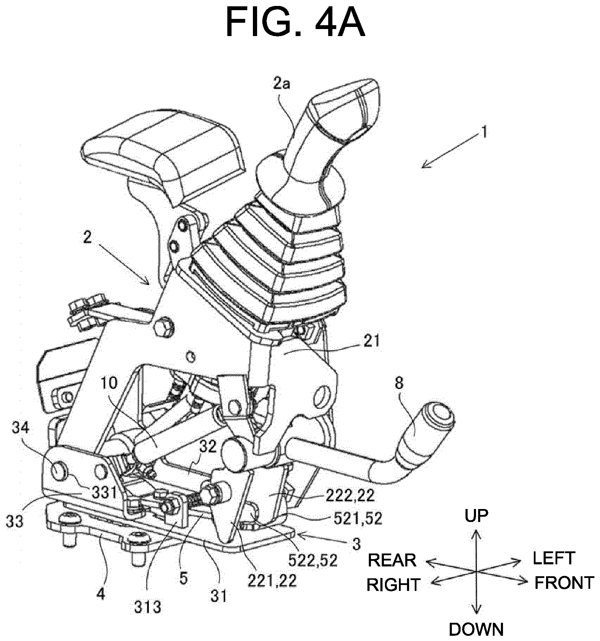

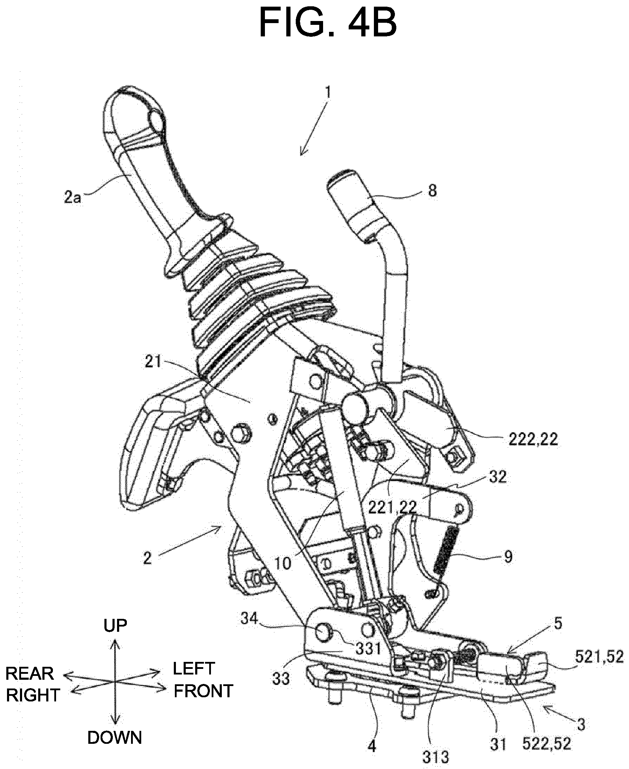

FIG. 4A and FIG. 4B are perspective views showing a schematic configuration of the operation device 1 on the left side. FIG. 4B is a view showing a state in which the posture of the lever stand 2 has been changed from a first posture shown in FIG. 4A to a second posture. The first posture and the second posture will be described later. Note that FIG. 1, FIG. 2A, FIG. 2B, FIG. 3A, and FIG. 3B show a state in which the lever stand 2 is in the first posture.

The lever stand 2 is disposed on a side (left side in this example) of the seat 102c and has an operation lever 2a. The operation lever 2a is disposed on the top of the lever stand 2. The operation lever 2a is a portion that is actually operated by an operator who sits on the seat 102c and operates the work device 103. Hydraulic control of the hydraulic actuator is performed by an operation of the operation lever 2a.

The first posture is a posture in which the operation lever 2a can be operated. The first posture is a condition required for performing an operation using the operation lever 2a, and the operation by the operation lever 2a may not be performed in the first posture. The second posture is a posture in which the operation lever 2a cannot be operated. The second posture widely includes postures in which the operation lever 2a cannot be operated, and the posture shown in FIG. 4B is merely an example of the second posture. In the present embodiment, it is possible to easily switch the posture of the operation lever 2a between the first posture and the second posture by raising and lowering the lever stand 2.

The lever stand 2 further has a stand frame 21 below the operation lever 2a. The stand frame 21 is used for coupling with the lever stand support portion 3 and the like. In the present embodiment, the stand frame 21 is composed of a plurality of members. However, the stand frame 21 may be composed of a single member in some cases.

The above-described cover 2b (see FIG. 1 and the like) is fixed to the stand frame 21. Therefore, the cover 2b can be considered as a part of the lever stand 2. In the present embodiment, the cutoff lever 8 is supported by the stand frame 21. Specifically, the cutoff lever 8 is pivotable with respect to the stand frame 21 between an upper limit position and a lower limit position. In a state in which the cutoff lever 8 is lowered (for example, the state shown in FIG. 1 and FIG. 4A, and the like), the cutoff lever 8 extending forward prevents the operator from exiting the work machine 100. When the cutoff lever 8 is raised to the upper limit position, pilot pressure is cut off, and the operation of the work machine 100 is disabled. The cutoff lever 8 in the upper limit position cannot be pivoted further upward with respect to the stand frame 21. When the cutoff lever 8 in the upper limit position is pulled upward, the front side of the lever stand 2 is lifted as described later.

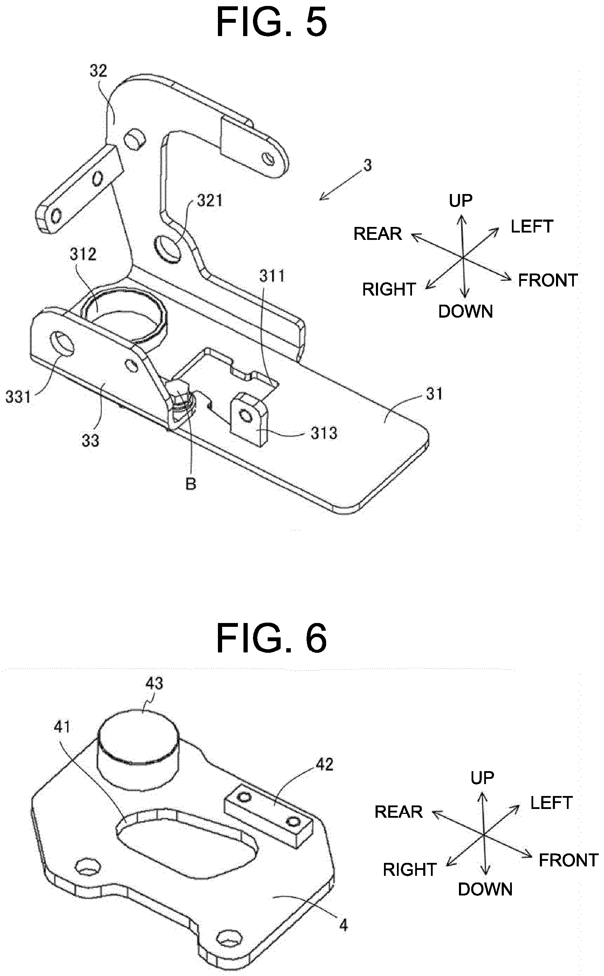

The lever stand support portion 3 is disposed below the lever stand 2. The lever stand support portion 3 supports the lever stand 2 so that the lever stand 2 is pivotable up and down. FIG. 5 is a perspective view showing a schematic configuration of a lever stand support portion 3. As shown in FIG. 4A, FIG. 4B, and FIG. 5, the lever stand support portion 3 has a bottom plate 31, a left side plate 32, and a right side plate 33. In the present embodiment, the lever stand support portion 3 is composed of a plurality of members. However, the lever stand support portion 3 may be composed of a single member in some cases.

The bottom plate 31 has a rectangular plate shape extending in the front-rear direction. The bottom plate 31 has a central opening 311 penetrating in the up-down direction in the central portion. Further, the bottom plate 31 has a rear opening 312 penetrating in the up-down direction in the rear portion. The left side plate 32 is disposed at a left end portion of the bottom plate 31 and extends in the up-down direction. The left side plate 32 has a left side plate opening 321 penetrating in the left-right direction. The right side plate 33 is disposed at a right end portion of the bottom plate 31 and extends in the up-down direction. The right side plate 33 has a right side plate opening 331 penetrating in the left-right direction.

As shown in FIG. 4A and FIG. 4B, the left side plate 32 and the right side plate 33 support a rear shaft portion 34 disposed at the rear portion thereof. The rear shaft portion 34 extends in the left-right direction. The rear shaft portion 34 is supported by the left side plate 32 and the right side plate 33 in a state in which a left end portion of the rear shaft portion 34 is inserted in the left side plate opening 321 and a right end portion of the rear shaft portion 34 is inserted in the right side plate opening 331.

The rear shaft portion 34 is disposed behind the lever stand support portion 3, and pivotably supports the stand frame 21 of the lever stand 2. That is, the rear portion of the lever stand 2 is pivotably supported by the rear shaft portion 34. Since the rear portion of the lever stand 2 is supported by the rear shaft portion 34, the front portion of the lever stand 2 can be raised and lowered. The first posture shown in FIG. 4A is a state in which the front portion of the lever stand 2 is lowered. The second posture shown in FIG. 4B is a state in which, from the first posture shown in FIG. 4A, the front portion of the lever stand 2 is lifted and the lever stand 2 is pivoted about the rear shaft portion 34.

The base portion 4 is disposed below the lever stand support portion 3. FIG. 6 is a perspective view showing a schematic configuration of the base portion 4. As shown in FIG. 4A, FIG. 4B, and FIG. 6, the base portion 4 has a rectangular flat plate shape. The base portion 4 is supported by the hood 102d in a state in which the base portion 4 is fixed to the hood 102d by fixing tools such as screws (see FIG. 3A and FIG. 3B).

The base portion 4 has a base opening 41 penetrating in the up-down direction in the central portion. Further, the base portion 4 includes a first convex portion 42 having a rectangular parallelepiped shape protruding upward on a side (specifically, the left side) of the base opening 41. In addition, the base portion 4 has a second convex portion 43 having a columnar shape protruding upward at the rear portion.

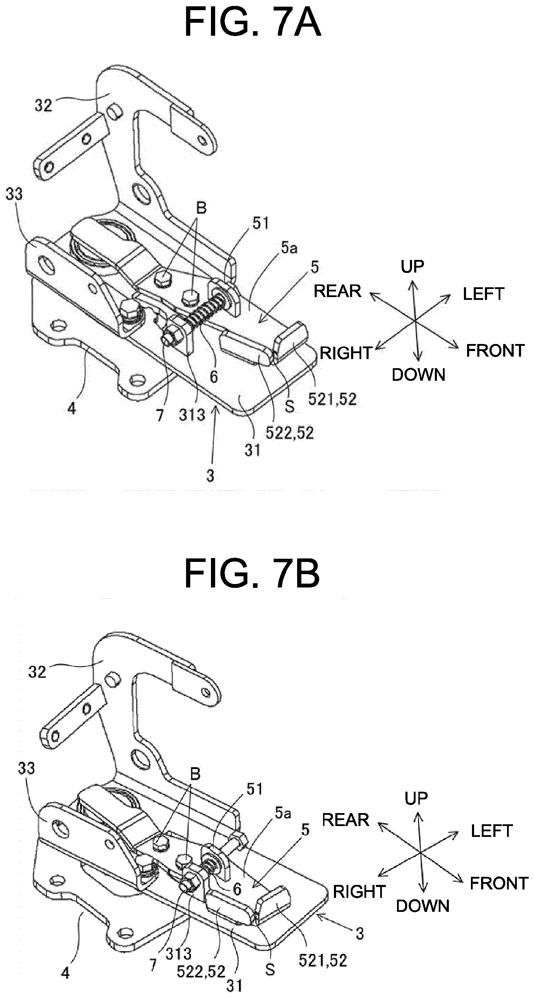

FIG. 7A and FIG. 7B are schematic perspective views each showing a relationship between the lever stand support portion 3, the base portion 4, and a holding plate 5. FIG. 7B is a view showing a state in which the posture of a lever stand support portion 3 has been changed from a third posture shown in FIG. 7A to a fourth posture. In the present embodiment, the third posture is a posture in which the operation device 1 is in the narrowed state (see FIG. 2A and FIG. 3A). The fourth posture is a posture in which the operation device 1 is in the expanded state (see FIG. 2B and FIG. 3B). When the lever stand support portion 3 is in the fourth posture, the operation lever 2a is disposed on an outer side in the left-right direction away from the seat 102c in the left-right direction than when the lever stand support portion 3 is in the third posture.

As shown in FIG. 7A and FIG. 7B, the lever stand support portion 3 and the base portion 4 are superposed to each other in a state in which the lever stand support portion 3 is positioned above the base portion 4. More specifically, the lever stand support portion 3 and the base portion 4 are superposed to each other in the up-down direction with the first convex portion 42 of the base portion 4 being inserted in the central opening 311 of the lever stand support portion 3. Further, the lever stand support portion 3 and the base portion 4 are superposed to each other in the up-down direction with the second convex portion 43 of the base portion 4 being inserted in the rear opening 312 of the lever stand support portion 3. Note that, in the present embodiment, the lever stand support portion 3 and the base portion 4 are superposed to each other in the up-down direction in a state in which a lower end portion of a fixing tool B for attaching the right side plate 33 to the bottom plate 31 is inserted in the base opening 41.

The base portion 4 supports the lever stand support portion 3 so that the lever stand support portion 3 is pivotable left and right. Since the lever stand support portion 3 supports the lever stand 2, the lever stand 2 is also pivotable left and right with respect to the base portion 4. In detail, the lever stand support portion 3 is provided so that the front portion of the lever stand support portion 3 is pivotable in the left-right direction about the second convex portion 43. The pivot range of the lever stand support portion 3 in the left-right direction is limited by the contact between the first convex portion 42 and the inner peripheral surface of the central opening 311. Note that, in the third posture shown in the FIG. 7A, the left side surface of the first convex portion 42 and the inner peripheral surface on the left side of the central opening 311 contact with each other, and the lever stand support portion 3 cannot pivot further to the right (inward in the left-right direction). Further, in the fourth posture shown in the FIG. 7B, the right side surface of the first convex portion 42 and the inner peripheral surface on the right side of the central opening 311 contact with each other, and the lever stand support portion 3 cannot pivot further to the left (outward in the left-right direction).

As shown in FIG. 7A and FIG. 7B, the holding plate 5 has a plate shape extending in the front-rear direction, and the holding plate 5 is supported by the base portion 4. In detail, the holding plate 5 is fixed to the upper surface of the first convex portion 42 using the fixing tool B. The upper surface of the first convex portion 42 protrudes slightly above the upper surface of the bottom plate 31 through the central opening 311. For this purpose, the holding plate 5 is arranged above the bottom portion (bottom plate 31) of the lever stand support portion 3. In the present embodiment, the bottom portion of the lever stand support portion 3 is provided with an opening portion 311, and the holding plate 5 is supported by the base portion 4 through the opening portion 311. Since the holding plate 5 is configured to use the opening portion 311 as described above, the holding plate 5 supported by the base portion 4 can be disposed above the bottom portion of the lever stand support portion 3 without complicating the structure.

In the present embodiment, the holding plate 5 and the lever stand support portion 3 hold a biasing member 6 that biases the lever stand support portion 3 into the third posture. By providing the biasing member 6 described above, when a predetermined operation (details will be described later) is performed, it is possible to automatically bring the lever stand support portion 3 into the third posture and bring the operation device 1 into the narrowed state.

Note that the biasing member may be configured to bias the lever stand support portion 3 in a direction in which the lever stand support portion 3 becomes the fourth posture. In this case, when a predetermined operation is performed, it is possible to automatically bring the lever stand support portion 3 into the fourth posture and bring the operation device 1 into the expanded state.

Specifically, support portions 313 and 51 for supporting a support bar 7 extending in the left-right direction are erected on the upper surface of the bottom plate 31 and the upper surface of the plate body 5a of the holding plate 5. The biasing member 6 is composed of a compression coil spring. Since the support bar 7 is inserted through the compression coil spring 6, the compression coil spring 6 is supported by the support bar 7 in a state in which the compression coil spring 6 is between the two support portions 313 and 51.

As described above, the holding plate 5 is fixed to the base portion 4. On the other hand, the lever stand support portion 3 is supported so that the lever stand support portion 3 is pivotable in the left-right direction with respect to the base portion 4. Therefore, the lever stand support portion 3 is pressed toward the seat 102c side (inward in the left-right direction) by the biasing force of the compression coil spring 6, and the lever stand support portion 3 becomes the third posture. In order to bring the lever stand support portion 3 into the fourth posture shown in FIG. 7B, it is necessary to push the lever stand support portion 3 to a side away from the seat 102c (outward in the left-right direction) against the biasing force of the compression coil spring 6.

For example, as shown in FIG. 7A and FIG. 7B, the holding plate 5 has a holding portion 52 extending upward from the plate body 5a. The holding portion 52 functions to hold the lever stand 2 in the first posture (see FIG. 4A and the like). As shown in the FIG. 4A, etc., the lever stand 2 has a protruding portion 22 that is to be held by the holding portion 52 in the first posture. When the lever stand 2 is in the first posture, the protruding portion 22 is positioned at the front lower portion and held by the holding portion 52. When the protruding portion 22 of the lever stand 2 is held by the holding portion 52 in a state in which the lever stand support portion 3 is in the third posture, it is possible to bring the operation device 1 into the narrowed state shown in FIG. 3A. When the protruding portion 22 of the lever stand 2 is held by the holding portion 52 in a state in which the lever stand support portion 3 is in the fourth posture, it is possible to bring the operation device 1 into the expanded state shown in FIG. 3B.

Specifically, the holding portion 52 includes a first holding portion 521 and a second holding portion 522 disposed adjacent to the first holding portion 521 in the left-right direction. The first holding portion 521 is disposed at a front end portion of the plate body 5a and extends upward and in the left-right direction. In the present embodiment, the first holding portion 521 is formed by bending the front side of the plate body 5a upward. The second holding portion 522 is disposed adjacent to the first holding portion 521 on the right side and extends upward and in the front-rear direction. In the present embodiment, the second holding portion 522 is formed by bending the front right side of the plate body 5a upward. A gap S is formed between the first holding portion 521 and the second holding portion 522 in the left-right direction. The holding portion 52 holds the protruding portion 22 by fitting the protruding portion 22 into the gap S.

Specifically, the protruding portion 22 includes a first protruding portion 221 and a second protruding portion 222 disposed on the outside of the first protruding portion 221 in the left-right direction. In the example shown in FIG. 4A, the second protruding portion 222 is disposed on the left side (the side away from the seat 102c) of the first protruding portion 221. The first protruding portion 221 and the second protruding portion 222 are spaced apart from each other in the left-right direction. Each of the first protruding portion 221 and the second protruding portion 222 has a flat plate shape extending in a direction parallel to the up-down direction.

When the first protruding portion 221 is held between the first holding portion 521 and the second holding portion 522, the lever stand support portion 3 is held in the fourth posture (see FIG. 3B). In this case, the first protruding portion 221 needs to be present below, and the lever stand 2 is in the first posture. The width of the gap S between the first holding portion 521 and the second holding portion 522 is slightly larger than the thickness of the first protruding portion 221 having a flat plate shape. Therefore, the first protruding portion 221 fitted into the gap S between the first holding portion 521 and the second holding portion 522 is held between the first holding portion 521 and the second holding portion 522.

When the second protruding portion 222 is held between the first holding portion 521 and the second holding portion 522, the lever stand support portion 3 is held in the third posture (see FIG. 3A). In this case, the second protruding portion 222 needs to be present below, and the lever stand 2 is in the first posture. The width of the gap S between the first holding portion 521 and the second holding portion 522 is slightly larger than the thickness of the second protruding portion 222 having a flat plate shape. Therefore, the second protruding portion 222 fitted into the gap S between the first holding portion 521 and the second holding portion 522 is held between the first holding portion 521 and the second holding portion 522.

In the present embodiment, as described above, the biasing member (compression coil spring ) 6 biases the lever stand support portion 3 in the direction in which the lever stand support portion 3 becomes the third posture (posture to become the narrowed state). Therefore, by holding the first protruding portion 221 between the first holding portion 521 and the second holding portion 522, the lever stand support portion 3 is held in the fourth posture against the biasing force of the biasing member 6.

As can be seen from the above description, in the present embodiment, the lever stand support portion 3 can be pivoted in the left-right direction to select the third posture or the fourth posture by pivoting the lever stand 2 from the first posture to the second posture. Further, the holding plate 5 holds, in the third posture or the fourth posture, the lever stand support portion 3 supporting the lever stand 2 in the first posture.

In the present embodiment, the direction of pivot of the lever stand 2 from the first posture to the second posture is upward. Further, the second posture is a posture in which the holding plate 5 releases the locked state in which the lever stand 2 is held in the first posture. In this embodiment, the second posture is also a posture in which the operation lever 2a cannot be operated.

According to the configuration of the present embodiment, when the lever stand 2 is in the first posture, it is possible to release the holding (locked state) of the lever stand 2 by the holding plate 5 by slightly pulling up the lever (specifically, the cutoff lever 8). After the lock state is easily released, it is possible to easily select the third posture or the fourth posture by moving the lever stand support portion 3 in the left-right direction together with the lever stand 2. Further, after selecting one of the third posture and the fourth posture, it is possible to easily fix the posture of the lever stand support portion 3 to the third posture or the fourth posture by lowering the pulled lever to return the lever stand 2 back to the first posture. That is, according to the present embodiment, it is possible to switch the operation device 1 between the expanded state and the narrowed state by a simple operation.

### <3. Action of Operation Device>

Next, the action and the like of the operation device 1 having the above-described structure will be described in more detail.

First, it is assumed that when an operator sits on the seat 102c, the operation device 1 is in the narrowed state as shown in FIG. 2A and FIG. 3B. When the operator performs work while sitting on the seat 102c of the work machine 100, the operator usually switches the state of the operation device 1 into the expanded state in order to perform the work in a comfortable posture.

At this time, the operator pulls up the cutoff lever 8. Thus, the front portion of the lever stand 2 in the first posture is lifted and the holding (locking) of the second protruding portion 222 by the first holding portion 521 and the second holding portion 522 is released. That is, the lever stand 2 becomes the second posture and the lever stand support portion 3 supporting the lever stand 2 becomes pivotable in the left-right direction. The operation of pulling up the cutoff lever 8 may be performed by a minimum pull-up amount capable of releasing the holding (locking) by the holding plate 5.

When the lock is released, the operator pivots the lever stand support portion 3 together with the lever stand 2 outward in the left-right direction against the biasing force of the compression coil spring 6 to bring the lever stand support portion 3 into the fourth posture. Thereafter, the operator lowers the cutoff lever 8 to bring the lever stand 2 into the first posture. Accordingly, the first protruding portion 221 is held between the first holding portion 521 and the second holding portion 522, and the locking of the movement of the lever stand 2 by the holding plate 5 is completed. By performing this operation on the left and right operation devices 1, the expanded state of the operation device 1 as shown in FIG. 2B and FIG. 3B can be obtained.

It may be desired to bring the operation device 1 in the expanded state into the narrowed state when, for example, work is ended or it is necessary to pass through a narrow passage. In these cases, the operator pulls up the cutoff lever 8. Thus, the front portion of the lever stand 2 in the first posture is lifted and the holding (locking) of the first protruding portion 221 by the first holding portion 521 and the second holding portion 522 is released. That is, the lever stand 2 becomes the second posture and the lever stand support portion 3 supporting the lever stand 2 becomes pivotable in the left-right direction.

When the lock is released, the lever stand support portion 3 is automatically pivoted inward in the left-right direction together with the lever stand 2 to become the third posture by the biasing force of the compression coil spring 6. After this automatic movement, the operator lowers the cutoff lever 8 to bring the lever stand 2 into the first posture. Accordingly, the second protruding portion 222 is held between the first holding portion 521 and the second holding portion 522, and locking of the movement of the lever stand 2 by the holding plate 5 is completed. By performing this operation on the left and right operation devices 1, it is possible to bring the operation devices 1 into the narrowed state.

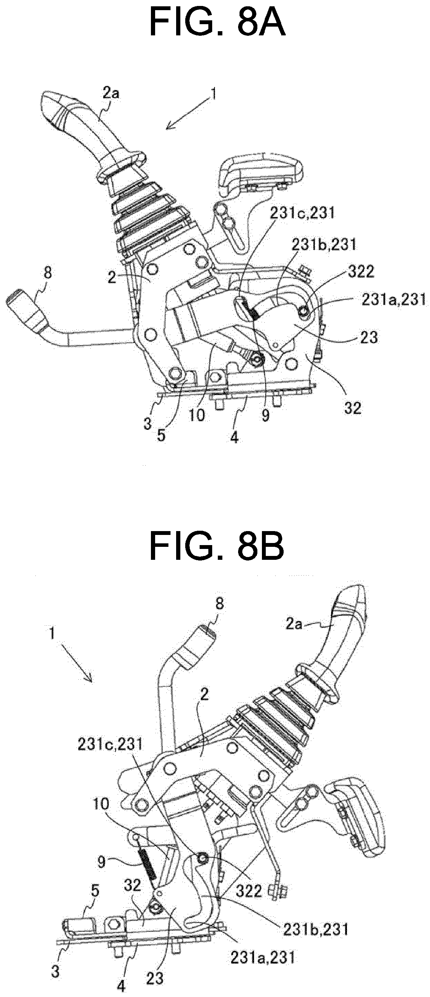

FIG. 8A and FIG. 8B are views explaining a lifting operation of the lever stand 2. FIG. 8A is a side view of the left side operation device 1 as viewed from the left side surface. In FIG. 8A, the lever stand 2 is in the first posture and is locked by the holding plate 5. In FIG. 8B, the lever stand 2 is in the second posture and is pulled up by the maximum permissible amount.

As shown in FIG. 8A and FIG. 8B, the lever stand 2 has a cam plate 23 on a side surface (specifically, a left side surface). The cam plate 23 is provided with a cam groove 231 into which a cam pin 322 fixed to the left side plate 32 of the lever stand support portion 3 is inserted. The cam groove 231 is S-shaped, and can be regarded as being divided into three portions of a first groove 231a, a second groove 231b, and a third groove 231c.

When the lever stand 2 is in the first posture, the cam pin 322 is in the first groove 231a located at the rear end of the cam groove 231. In the first posture, the biasing force of the tension spring 9 of which one end is attached to the left side plate 32 and the other end is attached to the cam plate 23 is applied to keep the the cam pin 322 being inserted in the first groove 231a. Therefore, the lever stand 2 is maintained in the first posture when an external force for lifting the front portion of the lever stand 2 is not applied.

When an external force for lifting the front portion of the lever stand 2 is applied, the cam plate 23 included in the lever stand 2 also moves against the biasing force of the tension spring 9. When the cam plate 23 moves, the cam pin 322 comes out of the first groove 231a and enters the second groove 231b. Further, when the cam plate 23 moves, the biasing force of the gas spring 10 assists the force for lifting the lever stand 2. Thus, the operator can easily lift the lever stand 2. Note that one end of the gas spring 10 is attached to the right side plate 33 and the other end thereof is attached to a side portion of the lever stand 2 (see FIG. 4A and FIG. 4B, etc.). Both end portions of the gas spring 10 are attached to respective parts so that the both end portions are pivotable in a vertical plane. The gas spring 10 expands as the lever stand 2 is lifted.

When the action of lifting the lever stand 2 is continued in a state in which the cam pin 322 is in the second groove 231b, the cam pin 322 enters a third groove 231c provided on the opposite side of the first groove 231a due to the movement of the cam plate 23. In this state, even if a force for lifting the lever stand 2 is applied, the movement of the cam plate 23 is obstructed by the cam pin 322, and the lever stand 2 cannot be lifted any further.

By providing the cam plate 23 and the cam pin 322 as described above, the lever stand 2 can be stably and easily moved up and down. Further, the lever stand 2 can be easily pivoted by the gas spring 10.

### <4. Notes>

The various technical features disclosed in the present specification can be modified in various ways without departing from the gist of the technical creation thereof. In addition, the multiple embodiments and variations described in the present specification may be combined to the extent possible.

### <5. Supplementary Notes>

An exemplary operation device of the present invention may be a configuration (first configuration) including a lever stand that is disposed on a side of a seat and has an operation lever; a lever stand support portion that supports the lever stand so that the lever stand is pivotable up and down; a base portion that is disposed below the lever stand support portion and supports the lever stand support portion so that the lever stand support portion is pivotable left and right; and a holding plate that is supported by the base portion and disposed above a bottom portion of the lever stand support portion; wherein, when the lever stand is pivoted from the first posture to the second posture, the lever stand support portion is made pivotable in a left-right direction to select a third posture or a fourth posture; and the holding plate holds, in the third posture or the fourth posture, the lever stand support portion supporting the lever stand in the first posture.

The operation device of the first configuration may have a configuration (second configuration) in which: the first posture is a posture in which the operation lever can be operated, and the second posture is a posture in which the operation lever cannot be operated.

The operation device of the first or second configuration may have a configuration (third configuration) in which: a bottom portion of the lever stand support portion is provided with an opening portion, and the holding plate is supported by the base portion through the opening portion.

The operation device of any one of the first to third configurations may have a configuration (fourth configuration) in which: the holding plate has a holding portion extending upward from a plate body, and the lever stand has a protruding portion held by the holding portion 52 in the first posture.

The operation device of the fourth configuration may have a configuration (fifth configuration) in which: the holding portion includes a first holding portion and a second holding portion disposed adjacent to the first holding portion in a left-right direction, the protruding portion includes a first protruding portion and a second protruding portion disposed on an outside of the first protruding portion in the left-right direction, when the first protruding portion is held between the first holding portion and the second holding portion, the lever stand support portion is held in the fourth posture, and when the second protruding portion is held between the first holding portion and the second holding portion, the lever stand support portion is held in the third posture.

The operation device of any one of the first to fifth configurations may have a configuration (sixth configuration) in which: when the lever stand support portion is in the fourth posture, the operation lever is disposed on an outer side in the left-right direction away from the seat in the left-right direction than when the lever stand support portion is in the third posture, and the holding plate and the lever stand support portion hold a biasing member that biases the lever stand support portion in a direction in which the lever stand support portion is brought into the third posture.

The operation device of the sixth configuration may have a configuration (seventh configuration) in which: by holding the first protruding portion between the first holding portion and the second holding portion, the lever stand support portion is held in the fourth posture against the biasing force of the biasing member.

An exemplary work machine of the present invention may have a configuration (eighth configuration) including the operation device according to any one of the first to seventh configurations; and the seat.

### REFERENCE SIGNS LIST

1 operation device
2 lever stand
2a operation lever
3 lever stand support portion
4 base portion
5 holding plate
5a plate body
6 compression coil spring (biasing member)
22 protruding portion
52 holding portion
100 work machine
102c seat
221 first protruding portion
222 second protruding portion
311 central opening (opening portion)
521 first holding portion
522 second holding portion

## Claims

1. An operation device (1) comprising:
a lever stand (2) that is disposed on a side of a seat (102c) and has an operation lever (2a) and a stand frame (21);
a lever stand support portion (3) that is disposed below the lever stand (2) and that supports the lever stand (2) so that the lever stand (2) is pivotable up and down; and
a cutoff lever (8) supported by the stand frame (21),
wherein the lever stand (2) is configured to move to a first posture where the operation lever (2a) is operable, and is configured to move to a second posture where the operation lever (2a) is not operable; and wherein
the lever stand support portion (3) supporting the lever stand (2) becomes pivotable in the left-right direction when the cutoff lever (8) is pulled up.

2. The operation device (1) according to claim 1, wherein:
the stand frame (21) is provided below the operation lever (2a).

3. The operation device (1) according to claim 1 or 2, further comprising:
a base portion (4) disposed below the lever stand support portion (3).

4. The operation device (1) according to claim 3, further comprising:
a holding plate (5) fixed to the base portion (4)

5. The operation device (1) according to claim 4, wherein:
the lever stand (2) is configured to move to a third posture where the operation device (1) is in a narrowed state, and is configured to move to a fourth posture where the operation device (1) is in an expanded state.

6. The operation device (1) according to claim 4 or 5, wherein:
a bottom portion of the lever stand support portion (3) is provided with an opening portion (311), and
the holding (5) plate is supported by the base portion (4) through the opening portion (311).

7. The operation device (1) according to claim 1, wherein:
the holding plate (5) has a holding portion (52) extending upward from a plate body (5a), and
the lever stand (2) has a protruding portion (22) held by the holding portion (52) in the first posture.

8. A work machine (100) comprising:
the operation device (1) according to any one of claims 1 to 7; and
a seat (102c).
